(19) Europäisches Patentamt
European Patent Office
Office européen des brevets

(11) **EP 2 335 024 B1**

(12) **EUROPÄISCHE PATENTSCHRIFT**

(45) Veröffentlichungstag und Bekanntmachung des Hinweises auf die Patenterteilung:
**05.03.2014 Patentblatt 2014/10**

(21) Anmeldenummer: **09782333.0**

(22) Anmeldetag: **28.08.2009**

(51) Int Cl.:
**G01C 21/36** *(2006.01)*

(86) Internationale Anmeldenummer:
**PCT/EP2009/061134**

(87) Internationale Veröffentlichungsnummer:
**WO 2010/026107 (11.03.2010 Gazette 2010/10)**

(54) **VERFAHREN UND VORRICHTUNG ZUM ANZEIGEN VON INFORMATIONEN IN EINEM FAHRZEUG**

METHOD AND DEVICE FOR DISPLAYING INFORMATION IN A VEHICLE

PROCÉDÉ ET DISPOSITIF POUR AFFICHER DES INFORMATIONS DANS UN VÉHICULE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **05.09.2008 DE 102008045994**

(43) Veröffentlichungstag der Anmeldung:
**22.06.2011 Patentblatt 2011/25**

(73) Patentinhaber: **Volkswagen Aktiengesellschaft 38440 Wolfsburg (DE)**

(72) Erfinder:
• **WAGNER, Volkmar 10965 Berlin (DE)**
• **KÖGLER, Indra-Lena 10829 Berlin (DE)**
• **CANIS, Daniel 10245 Berlin (DE)**

(74) Vertreter: **Reitstötter - Kinzebach Patentanwälte Sternwartstrasse 4 81679 München (DE)**

(56) Entgegenhaltungen:
**DE-A1- 10 023 160**

**Beschreibung**

Die vorliegende Erfindung betrifft ein Verfahren zum Anzeigen von Informationen in einem Fahrzeug, bei dem eine geographische Karte auf einer Anzeigefläche angezeigt wird, innerhalb der geographischen Karte ein Symbol für das Fahrzeug angezeigt wird, wobei sich die Position des Symbols relativ zu der geographischen Karte in Abhängigkeit von der geographischen Position des Fahrzeugs verändert, und in Abhängigkeit von der geographischen Position des Fahrzeugs ein graphisches Objekt mit einer Zusatzinformation innerhalb der geographischen Karte angezeigt wird. Ferner betrifft die Erfindung eine Vorrichtung zum Anzeigen von Informationen in einem Fahrzeug mit einem Speicher zum Speichern einer geographischen Karte und von Zusatzinformationen, die der geographischen Karte zugeordnet sind und denen graphische Objekte zugeordnet sind, einer Anzeigevorrichtung mit einer Anzeigefläche zum Anzeigen der Informationen, einer Einrichtung zum Bestimmen der geographischen Position des Fahrzeugs und einer Steuervorrichtung zum Steuern der auf der Anzeigefläche angezeigten Information, so dass innerhalb der angezeigten geographischen Karte ein Symbol für das Fahrzeug anzeigbar ist, dessen Position relativ zu der geographischen Karte in Abhängigkeit von der geographischen Position des Fahrzeugs veränderbar ist, und in Abhängigkeit von der geographischen Position des Fahrzeugs ein graphisches Objekt mit einer Zusatzinformation innerhalb der geographischen Karte anzeigbar ist.

Es ist bekannt in einem Fahrzeug mittels eines Navigationssystems eine geographische Karte anzuzeigen, bei der ein Fahrzeugsymbol in Abhängigkeit von der aktuellen geographischen Position des Fahrzeugs auf der geographischen Karte dargestellt wird, so dass der Betrachter erkennen kann, wo sich das Fahrzeug derzeit befindet. Innerhalb der geographischen Karte können dabei vielfältige Zusatzinformationen angezeigt werden. Beispielsweise können die den Straßen der geographischen Karte zugeordneten Verkehrsschilder anhand eines graphischen Objekts auf der geographischen Karte angezeigt werden. Die Anzeige des Verkehrsschilds kann beispielsweise dann verschwinden, wenn sich der angezeigte Kartenausschnitt so verändert hat, dass sich die Position des graphischen Objekts für das Verkehrsschild nicht mehr innerhalb des angezeigten Kartenausschnitts befindet.

In der DE 100 23 160 A1 wird ein Verfahren zum Darstellen einer dreidimensionalen Navigationskarte beschrieben, die mit hoher Qualität einen realitätsnahen, perspektivischen Eindruck vermitteln soll.

Es ist die Aufgabe der vorliegenden Erfindung, ein Verfahren und eine Vorrichtung der Eingangs genannten Art bereitzustellen, bei denen die Anzeige des graphischen Objekts für die Zusatzinformation verbessert ist.

Erfindungsgemäß wird diese Aufgabe durch ein Verfahren mit den Merkmalen zu Anspruch 1 und eine Vorrichtung mit den Merkmalen des Anspruchs 10 gelöst. Vorteilhafte Aus- und Weiterbildungen ergeben sich aus den Unteransprüchen.

Das erfindungsgemäße Verfahren ist dadurch gekennzeichnet, dass in Abhängigkeit von der geographischen Position des Fahrzeugs eine Bildfolge mit mehreren Bildern für das graphische Objekt erzeugt und angezeigt wird, wobei am Ende der Bildfolge das graphische Objekt verschwunden ist oder der Zusatzinformation nicht mehr zugeordnet werden kann. Bei dem erfindungsgemäßen Verfahren verschwindet somit das graphische Objekt nicht von einem Bild zum anderen, sondern es wird vielmehr eine graphische Animation für das graphische Objekt wiedergegeben, an deren Ende das graphische Objekt verschwunden ist oder der Zusatzinformation nicht mehr zugeordnet werden kann. Die fehlende Zuordnung des graphischen Objekts zu der Zusatzinformation liegt insbesondere dann vor, wenn ein verändertes graphisches Objekt zwar noch dargestellt wird, diesem Objekt jedoch kein Informationsgehalt mehr entnehmbar ist, um auf eine Zusatzinformation zu schließen.

Gemäß dem erfindungsgemäßen Verfahrens wird bei der Bildfolge eine perspektivische Drehung des graphischen Objekts um eine horizontale Achse dargestellt. Beispielsweise kann das graphische Objekt um seine untere Kante oder eine Achse durch den untersten Punkt des Objekts um 90° gekippt werden, so dass am Ende der Bildfolge nur noch ein Strich für die virtuelle Stirnfläche des graphischen Objekts dargestellt wird, der schließlich beim letzten Bild der Bildfolge verschwinden kann.

Alternativ dazu wird durch die Bildfolge ein Ausblenden des graphischen Objekts erzeugt. Dabei wird die Transparenz des graphischen Objekts erhöht, je näher das Fahrzeugsymbol bei dem graphischen Objekt auf der Anzeigefläche dargestellt wird.

Bei dem erfindungsgemäßen Verfahren gibt das Fahrzeugsymbol insbesondere die Fahrtrichtung des Fahrzeugs wieder. Beispielsweise kann das Fahrzeugsymbol ein Pfeil sein. Gemäß einer bevorzugten Ausgestaltung des erfindungsgemäßen Verfahrens wird das graphische Objekt für die Zusatzinformation in Fahrtrichtung vor dem Fahrzeugsymbol dargestellt. Das graphische Objekt liegt insbesondere genau in der auf der geographischen Karte dargestellten Fahrachse. Wird auf der geographischen Karte eine von einem Navigationssystem erzeugte Fahrroute angezeigt, wird das graphische Symbol für die Zusatzinformation mitten auf der angezeigten Fahrroute dargestellt.

Gemäß einer bevorzugten Weiterbildung des erfindungsgemäßen Verfahrens werden das Fahrzeugsymbol und das graphische Objekt während der Bildfolge so dargestellt, dass ein Umklappen des graphischen Objekts durch ein Überfahren durch das Fahrzeugsymbol wiedergegeben wird. Die von der Bildfolge erzeugte Animation erzeugt somit für den Betrachter den Eindruck, als ob das graphische Objekt für die Zusatzinformation durch die Bewegung des Fahrzeugsymbols umgeklappt wird, bis es nicht mehr sichtbar ist.

Gemäß einer Ausgestaltung des erfindungsgemäßen Verfahrens wird die Drehung des grafischen Objekts in eine erste Phase, bei der Bildpunkte des grafischen Objekts beschleunigt werden, und eine zweite Phase, bei der Bildpunkte des grafischen Objekts abgebremst werden, unterteilt. Dabei entspricht die erste Phase z. B. einem Drehwinkel des grafischen Objekts von 0° bis 45° und die zweite Phase einem Drehwinkel des grafischen Objekts von 45° bis 90°.

Unter einer beschleunigten Bewegung wird hier eine positive Beschleunigung verstanden, bei der sich die Geschwindigkeit erhöht, und unter einer abgebremsten Bewegung wird eine negative Beschleunigung verstanden, bei der sich die Geschwindigkeit erniedrigt.

Gemäß einer bevorzugten Weiterbildung des erfindungsgemäßen Verfahrens werden für aufeinander folgende Zwischenbilder zur Darstellung der Drehung die aufeinander folgenden Positionen x der Bildpunkte des grafischen Objekts in der ersten Phase folgende Rechenschritte durchgeführt:

$$\text{(i)} \qquad n = \frac{t - t_0}{d_1} \qquad ;$$

$$\text{(ii)} \qquad x = b_1 + c_1 \cdot n^4 \qquad ,$$

wobei

t eine Systemzeit ist, zu der die Informationen auf der Anzeigefläche dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts ist,
$c_1$ die gesamte Verschiebung des Bildpunkts des grafischen Objekts in der ersten Phase ist und wobei die Schritte (i) und (ii) so oft wiederholt werden, bis gilt, dass: $t > (t_0 + d_1)$.

Der Parameter x kann dabei z. B. die vertikale Position eines Punktes des grafischen Objekts oder einen Drehwinkel darstellen.

Des Weiteren werden für aufeinander folgende Zwischenbilder zur Darstellung der Dre-hung, die aufeinander folgenden Positionen x der Bildpunkte des Objekts, in der zweiten Phase folgende Rechenschritte durchgeführt:

$$\text{(i)} \qquad n = \frac{t - t_0}{d_2} - 1 \qquad ;$$

$$\text{(ii)} \qquad x = b_2 + c_2 \cdot (1 - n^4) \qquad ,$$

wobei

t eine Systemzeit ist, zu der die Informationen auf der Anzeigefläche dargestellt werden, wobei zu Beginn der Drehung der zweiten Phase $t = t_0$ ist,
$d_2$ die Dauer der zweiten Phase ist,
$b_2$ die Ausgangsposition des Bildpunkts des Objekts ist,
$c_2$ die Gesamtverschiebung des Bildpunkts des Objekts in der zweiten Phase ist und wobei die Schritte (i) und (ii) von der Recheneinheit so oft wiederholt werden, bis gilt: $t > (t_0 + d_2)$.

Gemäß einer bevorzugten Weiterbildung des erfindungsgemäßen Verfahrens wird die Geschwindigkeit des Fahrzeugs gemessen und die Dauer der Gesamtdrehung bzw. die Dauer der Drehung der ersten und/oder zweiten Phase in Abhängigkeit von der Geschwindigkeit des Fahrzeugs ermittelt. Bevorzugt ist die Dauer der Drehung umso länger, je höher die Geschwindigkeit des Kraftfahrzeugs ist. Bei höheren Geschwindigkeiten kann der Fahrer nämlich seinen Blick nur für kürzere Zeitintervalle auf das Display richten. Ferner ist der Abstand der Zeitintervalle, in denen der Fahrer seinen Blick auf das Display richtet, größer, da der Fahrer bei höheren Geschwindigkeiten seine Aufmerksamkeit stärker auf das Fahrgeschehen richten muss. Die Koppelung der Drehdauer des flächigen Objekts an die Geschwindigkeit des Kraftfahrzeugs stellt somit sicher, das der Fahrer bei höheren Geschwindigkeiten die Orientierung in der Informationsdarstellung behält und die Informationsinhalte auf diese Weise einfach, schnell und intuitiv erfassen kann.

Die Berechnung des Parameters für die Transparenz erfolgt dabei auf gleiche Weise, wie die vorstehend beschriebene Berechnung der Position x der Bildpunkte des graphischen Objekts bei der Drehung. Die Transparenz ändert sich dabei von 0 % auf 100 %, so dass am Ende der Bildfolge das graphische Objekt vollständig verschwunden ist.

Gemäß einer bevorzugten Ausgestaltung des erfindungsgemäßen Verfahrens wird als graphisches Objekt ein Verkehrszeichen dargestellt. Die Zusatzinformation betrifft somit den Informationsgehalt des dargestellten Verkehrszeichens. Dabei wird das graphische Objekt für das Verkehrszeichen auf der geographischen Karte angezeigt, bevor es für das Fahrzeug gültig ist. Wie in der Wirklichkeit kann der Betrachter somit das graphische Objekt für das Verkehrszeichen wahrnehmen, bevor es gültig wird. Dabei kann, wie in der Wirklichkeit, das graphische Objekt für das Verkehrszeichen bei der Position auf der geographischen Karte dargestellt werden, bei der es gültig wird.

Die geographische Karte kann zweidimensional auf der Anzeigefläche dargestellt werden. Die Bildfolge kann hingegeneine dreidimensionale perspektivische Veränderung des graphischen Objekts darstellen. Ferner kann die geographische Karte dreidimensional perspektivisch dargestellt werden. Z. B. kann eine Vogelperspektive dargestellt werden. Auch in diesem Fall kann die Bildfolge eine dreidimensionale perspektivische Veränderung des graphischen Objekts darstellen.

Die erfindungsgemäße Vorrichtung zum Anzeigen von Informationen in einem Fahrzeug ist dadurch gekennzeichnet, dass mit der Steuervorrichtung in Abhängigkeit von der geographischen Position des Fahrzeugs eine Bildfolge zur Anzeige auf der Anzeigefläche gemäß Anspruch 9 erzeugbar ist. Die Steuervorrichtung ist insbesondere so ausgebildet, dass die vorstehend beschriebenen Verfahrensschritte teilweise oder insgesamt durchgeführt werden können. Insbesondere können von der Steuervorrichtung Graphikdaten erzeugt und an die Anzeigevorrichtung übertragen werden, welche die auf der Anzeigefläche erzeugte Bildfolge für das graphische Objekt wiedergeben.

Die Erfindung wird nun anhand von Ausführungsbeispielen mit Bezug zu den Zeichnungen erläutert.

Fig. 1    zeigt schematisch ein Ausführungsbeispiel der erfindungsgemäßen Vorrichtung und deren Kopplung mit weiteren Einrichtungen des Fahrzeugs und

Fig. 2 bis 4    zeigen eine von einem Ausführungsbeispiel des erfindungsgemäßen Verfahrens erzeugte Anzeige auf der Anzeigefläche.

Die erfindungsgemäße Vorrichtung umfasst eine Anzeigevorrichtung 1 mit einer Anzeigefläche 2 zur Darstellung von Informationen. Bei der Anzeigefläche 2 kann es sich um ein Display beliebiger Bauart handeln. Beispielsweise kann es sich um ein Flüssigkristalldisplay, insbesondere ein Farbdisplay in TFT (thin film transistor)-Technik handeln. Die Anzeige auf der Anzeigefläche 2 ist frei programmierbar, d.h. es lassen sich beliebige Graphikdaten erzeugen, welche auf der Anzeigefläche 2 dargestellt werden.

Die Anzeigefläche 2 der Anzeigevorrichtung 1 ist in einem Bereich des Fahrzeugs befestigt, der zumindest für den Fahrer gut sichtbar ist. Beispielsweise kann die Anzeigefläche 2 Teil des sog. Kombiinstruments des Fahrzeugs sein, welches direkt im Sichtfeld des Fahrers angeordnet ist.

Die Anzeigevorrichtung 1 ist mit einer Steuervorrichtung 3 verbunden. Die Steuervorrichtung 3 ist wiederum mit einem Speicher 5 verbunden. In dem Speicher 5 sind insbesondere die zu einer geographischen Karte gehörigen Daten gespeichert. Ferner sind in dem Speicher 5 Daten zu Zusatzinformationen gespeichert, welche der geographischen Karte zugeordnet sind. Beispielsweise kann den Zusatzinformationen eine bestimmte geographische Position auf der geographischen Karte zugeordnet sein. Den Zusatzinformationen sind wiederum graphische Objekte zugeordnet, mit welchen die Zusatzinformationen innerhalb der geographischen Karte dargestellt werden können. Von der Steuervorrichtung 3 können Graphikdaten für die Darstellung eines Ausschnitts der geographischen Karte in Verbindung mit graphischen Objekten zu den Zusatzinformationen erzeugt werden. Diese Graphikdaten werden von der Anzeigevorrichtung 1 über die Anzeigefläche 2 zur Anzeige gebracht.

Die Steuervorrichtung 3 ist ferner mit einer Systemuhr 6 und mit einem Fahrzeugbus 7 gekoppelt. Über den Fahrzeugbus 7 werden der Steuervorrichtung 3 Daten eines Geschwindigkeitsmessers des Fahrzeugs übertragen Ferne ist die Steuervorrichtung 3 über den Fahrzeugbus 7 mit Fahrerassistenzsystemen des Fahrzeugs verbunden. Diese Fahrerassistenzsysteme können insbesondere ein Navigationssystem umfassen, deren Anzeige mittels der Anzeigefläche 2 angezeigt werden kann. Über den Fahrzeugbus 7 kann die Steuervorrichtung 3 ferner mit einer Einrichtung zum Bestimmen der geographischen Position des Fahrzeugs gekoppelt sein. Diese Einrichtung kann beispielsweise einen Empfänger für Daten enthalten, die von Satelliten zur Positionsbestimmung ausgesandt werden. Die vorstehend beschriebenen Einrichtungen können im Übrigen auch Teil eines Navigationssystems sein.

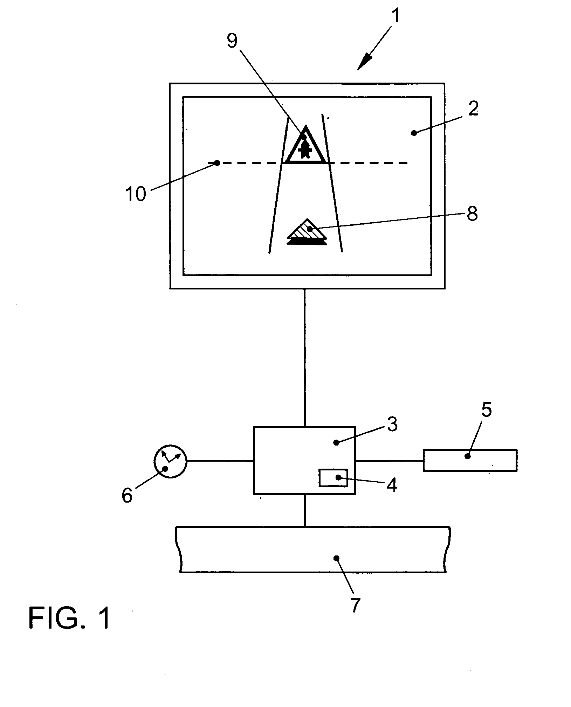

Im Folgenden wird ein erstes Beispiel für eine Informationsanzeige in dem Fahrzeug auf der Anzeigefläche 2 mit Bezug zu den Fig. 1 bis 4 im Detail erläutert:

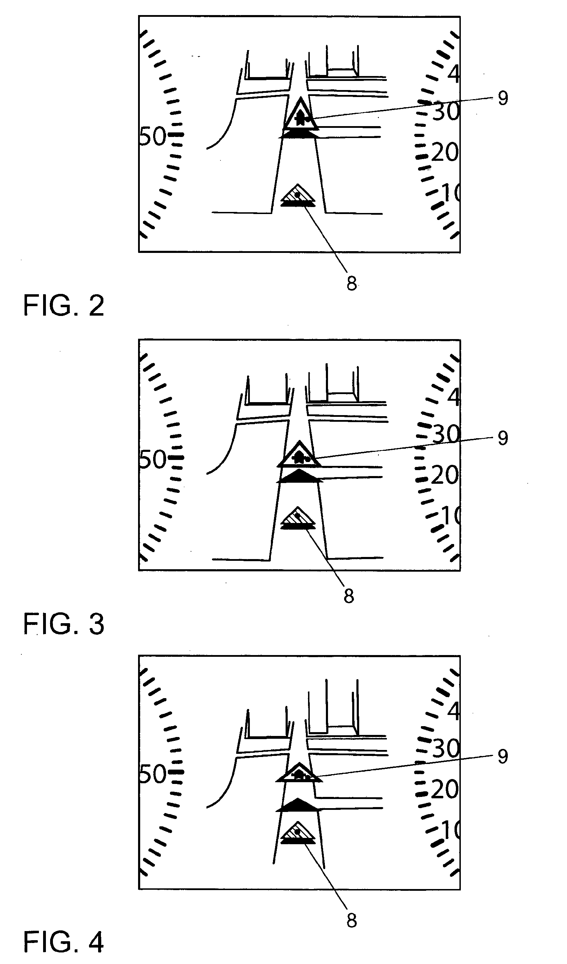

Wie in Fig. 2 gezeigt, wird von der Anzeigefläche 2 in einem Kombiinstrument des Fahrzeugs ein Ausschnitt einer Straßenkarte dargestellt. Es wird insbesondere eine Straßenkreuzung perspektivisch aus einer Ansicht von schräg oben wiedergegeben. Die aktuelle Position des eigenen Fahrzeugs wird relativ zu der Straßenkarte anhand eines Symbols 8 dargestellt, welches auch die Fahrtrichtung des Fahrzeugs wiedergibt.

Bei der in Fig. 2 wiedergegebenen Anzeige nähert sich das Fahrzeugsymbol 8 einer Kreuzung bzw. Straßenabzweigung. Dieser Straßenabzweigung ist ein Verkehrszeichen zugeordnet, nämlich ein Vorfahrtszeichen. Diese Zusatzinformation zu der Straßenkarte ist in dem Speicher 5 gespeichert. Ab einem bestimmten Abstand des Fahrzeugs von der Straßenabzweigung werden von der Steuervorrichtung 3 Graphikdaten erzeugt, welche ein graphisches Objekt 9 darstellen, welches das Verkehrszeichen symbolisch wiedergibt. Dabei ist der Zeitpunkt des Auftretens des graphischen Objekts 9 für das Verkehrszeichen ein anderer als der Zeitpunkt zu dem oder ab dem das Verkehrszeichen gültig wird. Wie in der Realität wird das graphische Objekt 9 für das Verkehrszeichen vor dem Erreichen des Verkehrszeichens eingeblendet.

Das graphische Objekt 9 für das Verkehrszeichen wird genau in der Fahrachse des Symbols 8 für das Fahrzeug, wie in Fig. 2 gezeigt, dargestellt. Wird auf der Karte zusätzlich eine Fahrroute des Navigationssystems angezeigt, wird das graphische Objekt 9 für das Verkehrszeichen mitten auf der angezeigten Fahrroute dargestellt.

In den weiteren Fig. 3 und 4 ist gezeigt, wie sich die Anzeige verändert, wenn sich das Fahrzeugsymbol 8 weiter dem graphischen Objekt 9 für das Verkehrszeichen annähert, d.h. wenn sich das Fahrzeug in der Realität der Straßenabzweigung annähert. In diesem Fall wird von der Steuervorrichtung eine Bildfolge mit einer Vielzahl von Bildern erzeugt, bei denen die Darstellung des graphischen Objekts 9 verändert wird. Das graphische Objekt 9 wird dabei perspektivisch so dargestellt, dass es um die horizontale Achse 10 (Fig. 1) um 90° perspektivisch nach hinten gedreht wird, bis nur noch die virtuelle Stirnfläche des Objekts 9 als Strich gezeigt wird, der schließlich am Ende der Bildfolge verschwindet, so dass das graphische Objekt 9 am Ende der Bildfolge verschwunden ist. Die Bildfolge führt somit zu einer Animation des graphischen Objekts 9, bei welcher der Eindruck erweckt wir, dass das graphische Objekt 9 von dem Fahrzeugsymbol 8 überfahren wird, wodurch das graphische Objekt 9 nach hinten umgeklappt wird. Das Ende der Bildfolge ist zumindest dann erreicht, wenn die Position des Fahrzeugsymbols 8 auf der Karte die Position des graphischen Objekts 9 für das Verkehrszeichen auf der Anzeigefläche 2 erreicht hat. In den Fig. 2 bis 4 sind drei Bilder der Bildfolge gezeigt, die jedoch eine sehr viel größere Anzahl an Zwischenbildern enthält, die zu einer Animation der Drehbewegung des graphischen Objekts 9 führen.

Im Folgenden wird im Detail beschrieben, wie das graphische Objekt 9 in zeitlicher Hinsicht gedreht wird:

Die Drehung des grafischen Objekts 9 wird in zwei Phasen unterteilt. Bei der ersten Phase wird das Objekt 9 von einer in Figur 2 gezeigten Ausgangsstellung um 45 ° in eine Neutralstellung gedreht. In einer zweiten Phase wird das grafische Objekt weiter bis zu einem Drehwinkel von 90° gedreht, so dass nur noch die virtuelle seitliche Stirnfläche des grafischen Objekts 9 sichtbar ist. Die perspektivische Darstellung der Drehung erfolgt dabei so, dass der Betrachter direkt auf das grafische Objekt 9 schaut, d. h. die Betrachtungsrichtung für die perspektivische Darstellung parallel zur Normalen der Anzeigefläche 2 verläuft.

Im Folgenden wird die Parametrisierung der Drehbewegung anhand der Position x beschrieben, die beispielsweise die Entfernung eines Bildpunktes des Objekts 9 von der Drehachse 10 in vertikaler Richtung wiedergibt.

Die Drehung des grafischen Objekts 9 wird durch aufeinander folgende Zwischenbilder dargestellt, die aufeinander folgende Positionen der Bildpunkte des grafischen Objekts 9 anzeigen. Bei der Berechnung der Grafikdaten für diese Positionen x werden in der ersten Phase folgende Rechenschritte durchgeführt:

$$(i) \qquad n = \frac{t - t_0}{d_1} \qquad ;$$

$$(ii) \qquad x = b_1 + c_1 \cdot n^4 \quad ,$$

wobei

t eine Systemzeit ist, zu der die Informationen auf der Anzeigefläche 2 dargestellt werden, wobei zu Beginn der Drehung der ersten Phase $t = t_0$ ist,
$d_1$ die Dauer der ersten Phase ist,
$b_1$ die Ausgangsposition des Bildpunkts des grafischen Objekts 9 ist,
$c_1$ die gesamte Verschiebung des Bildpunkts des grafischen Objekts 9 in der ersten Phase ist und wobei die Schritte (i) und (ii) so oft wiederholt werden, bis $t > (t_0 + d_1)$.

Für die zweite Phase werden folgende Rechenschritte durchgeführt:

$$(i) \qquad n = \frac{t - t_0}{d_2} - 1 \quad ;$$

$$(ii) \qquad x = b_2 + c_2 \cdot (1 - n^4) \quad ,$$

wobei

t eine Systemzeit ist, zu der die Informationen auf der Anzeigefläche 2 dargestellt werden, wobei zu Beginn der Drehung der zweiten Phase $t = t_0$ ist,
$d_2$ die Dauer der zweiten Phase ist,
$b_2$ die Ausgangsposition des Bildpunkts des grafischen Objekts 9 ist,
$c_2$ die Gesamtverschiebung des Bildpunkts des grafischen Objekts 9 in der zweiten Phase ist und
wobei die Schritte (i) und (ii) so oft wiederholt werden, bis gilt: $t > (t_0 + d_2)$.

Die Rechenschritte werden von einer Recheneinheit 4 der Steuervorrichtung 3 ausgeführt, wobei der Recheneinheit 4 von der Systemuhr 6 die Systemzeit t übertragen wird.
Die Dauer $d_1$ der Drehung der ersten Phase ist in einem Bereich von 0,25 Sekunden bis 1 Sekunde, insbesondere in einem Bereich von 0,6 Sekunden bis 0,8 Sekunden. Gleichermaßen ist die Dauer der Drehung der zweiten Phase in einem Bereich von 0,25 Sekunden bis 1 Sekunde, insbesondere in einem Bereich von 0,6 Sekunden bis 0,8 Sekunden.
Gemäß einer Weiterbildung des Ausführungsbeispiels werden in der Steuervorrichtung 3 und damit der Recheneinheit 4 über den Fahrzeugbus 7 die Daten des Geschwindigkeitsmessers des Fahrzeugs übertragen. Diese Daten werden von der Recheneinheit 4 verwendet, um die Dauer der Drehung für die beiden Phasen zu ermitteln. Dabei ist die Dauer der Gesamtdrehung umso länger, je höher die Geschwindigkeit des Fahrzeugs ist.
Bei einem anderen Beispiel wird das graphische Objekt 9 nicht gedreht, sondern es wird durch die Bildfolge ein Ausblenden des graphischen Objekts 9 erzeugt, indem die Transparenz des graphischen Objekts 9 während der Bildfolge erhöht wird, bis das graphische Objekt 9 vollständig verschwunden ist. Dabei wird die Transparenz umso mehr erhöht, je näher das Fahrzeugsymbol 8 bei dem graphischen Objekt 9 auf der Anzeigefläche 2 dargestellt wird. Die Art und Weise wie die Transparenz erhöht wird, entspricht der Art und Weise wie beim ersten Beispiel das graphische Objekt 9 gedreht wurde. Das graphische Objekt ist insbesondere dann vollständig verschwunden, wenn das Fahrzeugsymbol 8 die Position des graphischen Objekts 9 erreicht hat, damit es nicht zu einer Überlagerung der Darstellung des Fahrzeugsymbols 8 und des graphischen Objekts 9 kommt, bei der das Objekt 9 gegebenenfalls das Fahrzeugsymbol 8 überdeckt.

**BEZUGSZEICHENLISTE**

1 Anzeigevorrichtung
2 Anzeigefläche
3 Steuervorrichtung
4 Recheneinheit
5 Speicher
6 Systemuhr
7 Fahrzeugbus
8 Fahrzeugsymbol
9 graphisches Objekt
10 horizontale Achse

**Patentansprüche**

1. Verfahren zum Anzeigen von Informationen in einem Fahrzeug, bei dem

    - eine geographische Karte auf einer Anzeigefläche (2) angezeigt wird,
    - innerhalb der geographischen Karte ein Symbol (8) für das Fahrzeug angezeigt wird, wobei sich die Position des Symbols (8) relativ zu der geographischen Karte in Abhängigkeit von der geographischen Position des Fahrzeugs verändert,
    - in Abhängigkeit von der geographischen Position des Fahrzeugs ein graphisches Objekt (9) mit einer Zusatzinformation innerhalb der geographischen Karte angezeigt wird, und
    - in Abhängigkeit von der geographischen Position des Fahrzeugs eine Bildfolge mit mehreren Bildern für das graphische Objekt (9) erzeugt und angezeigt wird, wobei am Ende der Bildfolge das graphische Objekt (9) verschwunden ist oder der Zusatzinformation nicht mehr zugeordnet werden kann, **dadurch gekennzeichnet, dass**
    - bei der Bildfolge eine perspektivische Drehung des graphischen Objekts (9) um eine horizontale Achse dargestellt wird oder durch die Bildfolge ein Ausblenden des graphischen Objekts (9) erzeugt wird, indem die Transparenz des graphischen Objekts erhöht wird, je näher das Fahrzeugsymbol (8) bei dem graphischen Objekt (9) auf der Anzeigefläche (2) dargestellt wird.

2. Verfahren nach Anspruch 1,
   **dadurch gekennzeichnet,**
   **dass** das Fahrzeugsymbol (8) die Fahrtrichtung des Fahrzeugs wiedergibt und dass das graphische Objekt (9) in Fahrtrichtung vor dem Fahrzeugsymbol (8) dargestellt wird.

3. Verfahren nach Anspruch 1 oder 2,
   **dadurch gekennzeichnet,**
   **dass** die Drehung oder das Ausblenden in eine erste Phase, bei der Bildpunkte des graphischen Objekts (9) beschleunigt bewegt oder ausgeblendet werden, und eine zweite Phase, bei der Bildpunkte des graphischen Objekts (9) abgebremst bewegt oder ausgeblendet werden, unterteilt ist.

4. Verfahren nach Anspruch 3,
   **dadurch gekennzeichnet,**
   **dass** für aufeinander folgende Zwischenbilder zur Darstellung der Drehung oder des Ausblendens die aufeinander folgenden Positionen oder Transparenzen x der Bildpunkte des Symbols in der ersten Phase folgende Rechenschritte durchgeführt werden:

$$\text{(i)} \qquad n = \frac{t - t_0}{d_1} \qquad ;$$

$$\text{(ii)} \qquad x = b_1 + c_1 \cdot n^4 \qquad ,$$

wobei

t eine Systemzeit ist, zu der die Informationen auf der Anzeigefläche (2) dargestellt werden, wobei zu Beginn der Drehung oder des Ausblendens $t = t_0$ ist, d1 die Dauer der ersten Phase ist,
b1 die Ausgangsposition oder -transparenz des Bildpunkts des grafischen Objekts (9) ist,
c1 die gesamte Verschiebung oder Transparenz des Bildpunkts des grafischen Objekts (9) ist und wobei die Schritte (i) und (ii) so oft wiederholt werden, bis gilt: t>(t0+d1).

5. Verfahren nach Anspruch 3 oder 4,
**dadurch gekennzeichnet,**
**dass** für aufeinander folgende Zwischenbilder zur Darstellung der Drehung oder des Ausblendens die aufeinander folgenden Positionen oder Transparenzen x der Bildpunkte des Symbols in der zweiten Phase folgende Rechenschritte durchgeführt werden:

$$\text{(i)} \qquad n = \frac{t - t_0}{d_2} - 1 \qquad ;$$

$$\text{(ii)} \qquad x = b_2 + c_2 \cdot (1 - n^4) \qquad ,$$

wobei

t eine Systemzeit ist, zu der die Informationen auf der Anzeigefläche (2) dargestellt werden, wobei zu Beginn der Drehung oder Transparenz der zweiten Phase $t = t_0$ ist,
$d_2$ die Dauer der zweiten Phase ist,
$b_2$ die Ausgangsposition oder -transparenz des Bildpunkts des grafischen Objekts (9) ist,
$c_2$ die Gesamtverschiebung oder -transparenz des Bildpunkts des grafischen Objekts (9) in der zweiten Phase ist und
wobei die Schritte (i) und (ii) so oft wiederholt werden, bis gilt: $t > (t_0 + d_2)$.

6. Verfahren nach einem der Ansprüche 3 bis 5,
**dadurch gekennzeichnet,**
**dass** die Geschwindigkeit des Fahrzeugs gemessen wird und dass die Dauer der Gesamtdrehung oder des Ausblendens und/oder die Dauer der Drehung oder des Ausblendens der ersten und/oder zweiten Phase in Abhängigkeit von der Geschwindigkeit des Fahrzeugs ermittelt wird.

7. Verfahren nach einem der vorhergehenden Ansprüche,
**dadurch gekennzeichnet,**
**dass** als graphisches Objekt (9) ein Verkehrszeichen dargestellt wird.

8. Verfahren nach einem der vorhergehenden Ansprüche,
**dadurch gekennzeichnet,**
**dass** berechnet wird, wann voraussichtlich die geographische Position des Fahrzeugs der Position auf der Anzeigefläche (2) entspricht, bei der das graphische Objekt (9) dargestellt wird, und die Bildfolge im Wesentlichen endet, wenn die voraussichtliche geographische Position des Fahrzeugs der Position auf der Anzeigefläche (2) entspricht, bei der das graphische Objekt (9) dargestellt wird.

9. Vorrichtung zum Anzeigen von Informationen in einem Fahrzeug mit

- einem Speicher (5) zum Speichern einer geographischen Karte und von Zusatzinformationen, die der geographischen Karte zugeordnet sind und denen graphische Objekte (9) zugeordnet sind,
- einer Anzeigevorrichtung (1) mit einer Anzeigefläche (2) zum Anzeigen der Informationen,
- einer Einrichtung zum Bestimmen der geographischen Position des Fahrzeugs,
- einer Steuervorrichtung (3) zum Steuern der auf der Anzeigefläche (2) angezeigten Information, so dass innerhalb der angezeigten geographischen Karte ein Symbol (8) für das Fahrzeug anzeigbar ist, dessen Position relativ zu der geographischen Karte in Abhängigkeit von der geographischen Position des Fahrzeugs veränderbar ist, und in Abhängigkeit von der geographischen Position des Fahrzeugs ein graphisches Objekt (9) mit einer Zusatzinformation innerhalb der geographischen Karte anzeigbar ist,

bei der

- mit der Steuervorrichtung (3) in Abhängigkeit von der geographischen Position des Fahrzeugs eine Bildfolge zur Anzeige auf der Anzeigefläche (2) erzeugbar ist, die mehrere Bilder für das graphische Objekt (9) umfasst, wobei am Ende der Bildfolge das graphische Objekt (9) verschwunden ist oder der Zusatzinformation nicht mehr zugeordnet werden kann, **dadurch gekennzeichnet, dass**
- bei der Bildfolge eine perspektivische Drehung des graphischen Objekts (9) um eine horizontale Achse darstellbar ist oder durch die Bildfolge ein Ausblenden des graphischen Objekts (9) erzeugbar ist, indem die Transparenz des graphischen Objekts erhöhbar ist, je näher das Fahrzeugsymbol (8) bei dem graphischen Objekt (9) auf der Anzeigefläche (2) dargestellt wird.

**Claims**

1.  Method for displaying information in a vehicle, in which

    - a geographic map is displayed on a display surface (2),
    - a symbol (8) for the vehicle is displayed within the geographic map, wherein the position of the symbol (8) relative to the geographic map varies in dependence on the geographic position of the vehicle,
    - a graphical object (9) having an additional information item is displayed within the geographic map in dependence on the geographic position of the vehicle, and
    - an image sequence of a plurality of images for the graphical object (9) is generated and displayed in dependence on the geographic position of the vehicle, wherein the graphical object (9) vanishes at the end of the image sequence or can no longer be assigned to the additional information item, **characterized in that**
    - a perspective rotation of the graphical object (9) about a horizontal axis is depicted for the image sequence or a fade-out of the graphical object (9) is generated over the course of the image sequence by increasing the transparency of the graphical object the closer the vehicle symbol (8) is depicted on the display surface (2) to the graphical object (9).

2.  Method according to Claim 1, **characterized in that** the vehicle symbol (8) depicts the direction of travel of the vehicle and **in that** the graphical object (9) is depicted in front of the vehicle symbol (8) in the direction of travel.

3.  Method according to Claim 1 or 2, **characterized in that** the rotation or the fade-out is divided into a first phase, in which the pixels of the graphical object (9) are moved or are faded out in an accelerated fashion, and a second phase, in which the pixels of the graphical object (9) are moved or are faded out in a decelerated fashion.

4.  Method according to Claim 3, **characterized in that** the following calculation steps are carried out for successive intermediate images for depicting the rotation or the fade-out of the successive positions or transparencies x of the pixels of the symbol in the first phase:

$$(i) \quad n = \frac{t - t_0}{d_1} \; ;$$

$$(ii) \quad x = b_1 + c_1 \cdot n^4 \, ,$$

wherein

t is a system time at which the information is depicted on the display surface (2), with $t = t_0$ at the beginning of the rotation or of the fade-out,
$d_1$ is the duration of the first phase,
$b_1$ is the initial position or transparency of the pixel of the graphical object (9),
$c_1$ is the total displacement or transparency of the pixel of the graphical object (9) and wherein steps (i) and (ii) are repeated until $t > (t_0 + d_1)$.

5. Method according to Claim 3 or 4, **characterized in that** the following calculation steps are carried out for successive intermediate images for depicting the rotation or the fade-out of the successive positions or transparencies x of the pixels of the symbol in the second phase:

$$\text{(i)} \quad n = \frac{t - t_0}{d_2} - 1\,;$$

$$\text{(ii)} \quad x = b_2 + c_2 \cdot (1 - n^4)\,,$$

wherein

t is a system time at which the information is depicted on the display surface (2), with $t = t_0$ at the beginning of the rotation or of the transparency of the second phase,
$d_2$ is the duration of the second phase,
$b_2$ is the initial position or transparency of the pixel of the graphical object (9),
$c_2$ is the total displacement or transparency of the pixel of the graphical object (9) in the second phase and wherein steps (i) and (ii) are repeated until $t > (t_0 + d_2)$.

6. Method according to one of Claims 3 to 5, **characterized in that** the speed of the vehicle is measured and **in that** the duration of the total rotation or of the fade-out and/or the duration of the rotation or of the fade-out of the first and/or second phase is ascertained in dependence on the speed of the vehicle.

7. Method according to one of the preceding claims, **characterized in that** a traffic sign is depicted as the graphical object (9).

8. Method according to one of the preceding claims, **characterized in that** a calculation is carried out with respect to when the geographic position of the vehicle is expected to correspond to the position on the display surface (2) at which the graphical object (9) is depicted, and the image sequence substantially ends when the expected geographic position of the vehicle corresponds to the position on the display surface (2) at which the graphical object (9) is depicted.

9. Device for displaying information in a vehicle, having

- a memory (5) for storing a geographic map and additional information that is assigned to the geographic map and that is assigned graphical objects (9),
- a display device (1) having a display surface (2) for displaying the information,
- an apparatus for determining the geographic position of the vehicle,
- a control device (3) for controlling the information displayed on the display surface (2) such that within the displayed geographic map a symbol (8) for the vehicle is displayable, the position of which relative to the geographic map is variable in dependence on the geographic position of the vehicle, and a graphical object (9) having an additional information item is displayable within the geographic map in dependence on the geographic position of the vehicle,
- in which, in dependence on the geographic position of the vehicle, an image sequence comprising a plurality of images for the graphical object (9) is generatable using the control device (3) for display on the display surface (2), wherein the graphical object (9) vanishes at the end of the image sequence or can no longer be assigned to the additional information item, **characterized in that**
- a perspective rotation of the graphical object (9) about a horizontal axis is depictable for the image sequence or a fade-out of the graphical object (9) is generatable over the course of the image sequence by being able to increase the transparency of the graphical object the closer the vehicle symbol (8) is depicted on the display surface (2) to the graphical object (9).

**Revendications**

1. Procédé pour afficher des informations dans un véhicule, selon lequel

 - une carte géographique est affichée sur une surface d'affichage (2),
 - un symbole (8) pour le véhicule est affiché à l'intérieur de la carte géographique, la position du symbole (8) par rapport à la carte géographique variant en fonction de la position géographique du véhicule,
 - en fonction de la position géographique du véhicule, un objet graphique (9) avec une information supplémentaire est affiché à l'intérieur de la carte géographique, et
 - en fonction de la position géographique du véhicule, une séquence d'images comprenant plusieurs images pour l'objet graphique (9) est générée et affichée, l'objet graphique (9) ayant disparu à la fin de la séquence d'images ou ne pouvant plus être associé à l'information supplémentaire, **caractérisé en ce que**
 - lors de la séquence d'images, une rotation en perspective de l'objet graphique (9) autour d'un axe horizontal est représentée ou un masquage progressif de l'objet graphique (9) est produit par la séquence d'images en augmentant la transparence de l'objet graphique d'autant plus que le symbole du véhicule (8) est représenté proche de l'objet graphique (9) sur la surface d'affichage (2).

2. Procédé selon la revendication 1, **caractérisé en ce que** le symbole du véhicule (8) restitue le sens de circulation du véhicule et **en ce que** l'objet graphique (9) est représenté devant le symbole du véhicule (8) dans le sens de circulation.

3. Procédé selon la revendication 1 ou 2, **caractérisé en ce que** la rotation ou le masquage progressif est divisé en une première phase, au cours de laquelle les pixels de l'objet graphique (9) sont déplacés ou masqués progressivement de manière accélérée, et une deuxième phase, au cours de laquelle les pixels de l'objet graphique (9) sont déplacés ou masqués progressivement de manière ralentie.

4. Procédé selon la revendication 3, **caractérisé en ce que** pour les images intermédiaires successives, en vue de représenter la rotation ou le masquage progressif des positions ou des transparences successives x des pixels du symbole, les étapes de calcul suivantes sont exécutées dans la première phase :

$$\text{(i)} \quad n = \frac{t - t_0}{d_1} \ ;$$

$$\text{(ii)} \quad x = b_1 + c_1 * n^4,$$

où

t désigne un temps système auquel les informations sont représentées sur la surface d'affichage (2), avec t = $t_0$ au début de la rotation ou du masquage progressif,
$d_1$ désigne la durée de la première phase,
$b_1$ désigne la position ou la transparence initiale du pixel de l'objet graphique (9),
$c_1$ désigne le décalage ou la transparence total(e) du pixel de l'objet graphique (9) et les étapes (i) et (ii) sont répétées aussi souvent que nécessaire jusqu'à ce que :

$$t > (t_0 + d_1).$$

5. Procédé selon la revendication 3 ou 4, **caractérisé en ce que** pour les images intermédiaires successives, en vue de représenter la rotation ou le masquage progressif des positions ou des transparences successives x des pixels du symbole, les étapes de calcul suivantes sont exécutées dans la deuxième phase :

$$\text{(i)} \quad n = \frac{t - t_0}{d_2} - 1 \ ;$$

$$(ii) \quad x = b_2 + c_2 * (1-n^4),$$

où

t désigne un temps système auquel les informations sont représentées sur la surface d'affichage (2), avec t = $t_0$ au début de la rotation de la transparence de la deuxième phase,
$d_2$ désigne la durée de la deuxième phase,
$b_2$ désigne la position ou la transparence initiale du pixel de l'objet graphique (9),
$c_2$ désigne le décalage ou la transparence total(e) du pixel de l'objet graphique (9) dans la deuxième phase et les étapes (i) et (ii) sont répétées aussi souvent que nécessaire jusqu'à ce que :

$$t > (t_0 + d_2).$$

6. Procédé selon l'une des revendications 3 à 5, **caractérisé en ce que** la vitesse du véhicule est mesurée et **en ce que** la durée de la rotation totale ou du masquage progressif et/ou la durée de la rotation ou du masquage progressif de la première et/ou de la deuxième phase sont déterminées en fonction de la vitesse du véhicule.

7. Procédé selon l'une des revendications précédentes, **caractérisé en ce que** l'objet graphique (9) représenté est un panneau de circulation.

8. Procédé selon l'une des revendications précédentes, **caractérisé en ce que** le moment estimé auquel la position géographique du véhicule correspondra à la position de représentation de l'objet graphique (9) sur la surface d'affichage (2) est calculé, et la séquence d'images se termine pour l'essentiel lorsque la position géographique estimée du véhicule correspond à la position sur la surface d'affichage (2) à laquelle est représenté l'objet graphique (9).

9. Dispositif pour afficher des informations dans un véhicule, comprenant

- une mémoire (5) pour mémoriser une carte géographique et des informations supplémentaires qui sont associées à la carte géographique et auxquelles sont associés des objets graphiques (9),
- un dispositif d'affichage (1) muni d'une surface d'affichage (2) pour afficher les informations,
- un appareil pour déterminer la position géographique du véhicule,
- un dispositif de commande (3) pour commander l'information affichée sur la surface d'affichage (2), de sorte qu'un symbole (8) pour le véhicule puisse être affiché à l'intérieur de la carte géographique affichée, dont la position par rapport à la carte géographique peut varier en fonction de la position géographique du véhicule, et un objet graphique (9) avec une information supplémentaire puisse être affiché à l'intérieur de la carte géographique en fonction de la position géographique du véhicule,
avec lequel
- le dispositif de commande (3), en fonction de la position géographique du véhicule, permet de générer une séquence d'images en vue de son affichage sur la surface d'affichage (2), laquelle comprend plusieurs images pour l'objet graphique (9), l'objet graphique (9) ayant disparu à la fin de la séquence d'images ou ne pouvant plus être associé à l'information supplémentaire, **caractérisé en ce que**
- lors de la séquence d'images, une rotation en perspective de l'objet graphique (9) autour d'un axe horizontal peut être représentée ou un masquage progressif de l'objet graphique (9) peut être produit par la séquence d'images **en ce que** la transparence de l'objet graphique peut être augmentée d'autant plus que le symbole du véhicule (8) est représenté proche de l'objet graphique (9) sur la surface d'affichage (2).

FIG. 1

FIG. 2

FIG. 3

FIG. 4

**EP 2 335 024 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10023160 A1